# EUROPEAN PATENT APPLICATION

(11) **EP 4 678 371 A2**
(43) Date of publication of application: **14.01.2026**
(21) Application number: 25187774.2
(22) Date of filing: 07.07.2025
(51) Int. Cl.: B29C 45/62, B29C 45/74

(54) **INJECTION UNIT AND INJECTION MOLDING MACHINE, AND ADJUSTING METHOD FOR INJECTION UNIT**

(30) Priority: 08.07.2024 JP 2024109575
(71) Applicant: The Japan Steel Works, Ltd., Tokyo 141-0032 (JP)
(72) Inventor: NIYAMA, Takuya, Tokyo, 141-0032 (JP); ANDO, Kotone, Tokyo, 141-0032 (JP)
(74) Representative: Simmons & Simmons LLP (Munich)

(57) **Abstract**

An injection unit (3) comprises an injection cylinder (31), heaters (34) that are attached to side surfaces of the injection cylinder (3) along an axial direction (X) of the injection cylinder (3), and heat-retaining components (35) that cover at least a part of outer circumference surfaces (34A) of the heaters (34) in the axial direction (X). The injection cylinder (31) comprises supply sections (H1, H2) to which an injection molding material is supplied, a compression section (H3) that compresses the injection molding material, and measurement sections (H4, H5) that measure the amount of a compressed injection molding material. Heat retention for the heaters (34) in the compression section (H3) is lower than heat retention for the heaters (34) in the supply sections (H1, H2) and heat retention for the heaters (34) in the measurement sections (H4, H5).

## Description

### FIELD

The present invention relates to an injection unit and an injection molding machine, and further, to an adjusting method for the injection unit.

### BACKGROUND

An injection molding machine comprises an injection unit for injecting an injection molding material. Japanese Patent Application Laid-Open No. H11 (1999)-115015 describes an injection unit that comprises an injection cylinder with a built-in screw, a heater that is attached to the injection cylinder, and a heat-retaining cover that is wrapped around the heater.

### SUMMARY

The heat-retaining cover prevents heat dissipation generated by the injection cylinder and heater, thereby improving heat retention of the injection unit and contributing to reducing power consumption. However, since the distribution of heat generated from the injection cylinder differs depending on the axial position of the injection cylinder, heat retention of the heat-retaining cover may become too high in some parts. Excessively high heat retention of the heat-retaining cover may result in excessive temperature of the injection molding material. The appropriate temperature of the injection molding material depends on the molding conditions of the injection molding material and the molding cycle.

An object of the present disclosure is to provide an injection unit that can achieve appropriate heat retention according to molding conditions and molding cycles.

The injection unit of the present disclosure comprises heaters attached to the side surfaces of the injection cylinder and heat-retaining components that cover at least a part of the outer circumference surfaces of the heaters in the axial direction. Heat retention for heaters in the compression section is lower than heat retention for heaters in the supply sections and heat retention for heaters in the measurement sections.

### BRIEF DESCRIPTION OF THE DRAWINGS

The above features and advantages of the present invention will become more apparent based on the following description of certain preferred embodiments taken in conjunction with the accompanying drawings, in which:
Fig. 1 is a schematic front view of the injection molding machine according to an embodiment of the present disclosure;
Fig. 2 is a partial cross-sectional view of the injection unit according to the present disclosure;
Fig. 3 is a view showing the change over time of the amount of control input to the heaters in comparative examples according to the present disclosure;
Fig. 4 is a view showing the temperature variation of various parts of the injection cylinder in comparative examples according to the present disclosure;
Fig. 5 is a view showing the temperature variation of each part of the injection cylinder in the embodiment according to the present disclosure;
Fig. 6 is a schematic diagram of an outer heat-retaining component according to the present disclosure; and
Fig. 7 is a side view of the outer heat-retaining components attached to inner heat-retaining components according to the present disclosure.

### DETAILED DESCRIPTION

### Overall Configuration of Injection Molding Machine 1

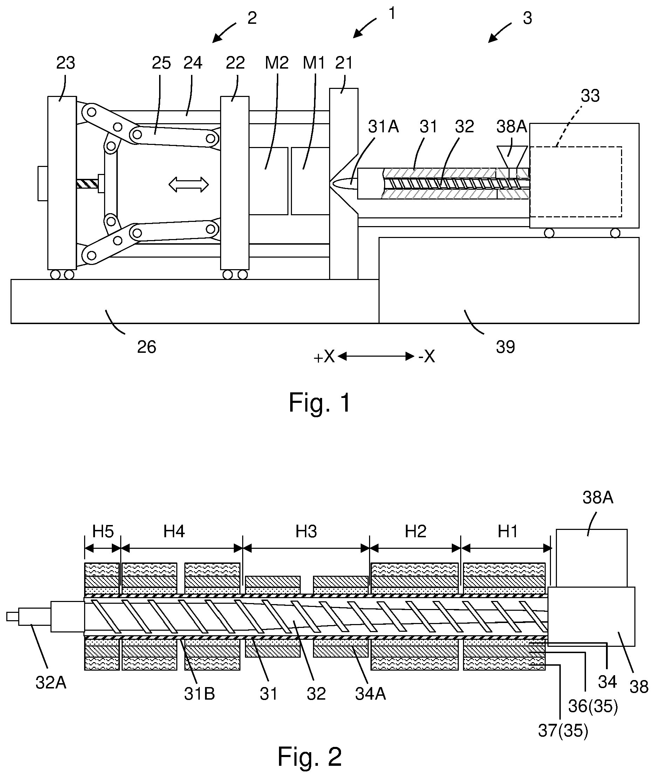

Fig. 1 shows a schematic front view of the embodiment of injection molding machine 1. Injection molding machine 1 is a horizontal injection molding machine that injects a resin. Injection molding machine 1 generally comprises mold-clamping unit 2 that supports the mold and that opens and closes the mold, and injection unit 3 that heats and melts a resin and that injects the resin. The material to be injected may be molten metal. In the following description, the X-direction refers to the axial direction of injection cylinder 31. In the X-direction, the direction from injection unit 3 toward mold-clamping unit 2 or the direction in which the material is injected is referred to as the +X-direction, and the direction from mold-clamping unit 2 toward injection unit 3 is referred to as the -X-direction. For the sake of convenience of illustration, dimensions of devices and elements shown in the drawings may differ from actual dimensions.

### Mold-Clamping Unit 2

Mold-clamping unit 2 includes fixed platen 21 that is fixed to bed 26 on which fixed mold M1 is mounted and movable platen 22 that can slide on bed 26 and on which movable mold M2 is mounted. Mold-clamping housing 23 that is slidable on bed 26 is provided on the side of movable platen 22 that is opposite of fixed platen 21, and fixed platen 21 and mold-clamping housing 23 are connected by a plurality of tie bars 24. Movable platen 22 can move along tie bars 24. Link mechanism 25 for opening and closing molds M1 and M2 is provided between movable platen 22 and mold-clamping housing 23. Link mechanism 25 is driven by an electric ball screw. Instead of link mechanism 25, a hydraulic mold clamping injection cylinder may be provided. A cavity into which resin is injected is formed between fixed mold M1 and movable mold M2.

### Injection Unit 3

Injection unit 3 is provided on base 39. Injection unit 3 comprises hollow cylindrical injection cylinder 31 for heating, melting, and injecting resin, screw 32 that is housed in injection cylinder 31, and drive mechanism 33 for driving screw 32. Injection nozzle 31A that supplies resin into the cavity formed between molds M1 and M2 is attached to the tip of injection cylinder 31 in the +X-direction. Screw 32 includes screw head 32A (see Fig. 2) at its tip in the +X-direction. Screw 32 is both rotated and driven in the X-direction by drive mechanism 33.

Fig. 2 shows a partial cross-sectional view of injection unit 3 and shows injection cylinder 31, screw 32, heaters 34, and heat-retaining components 35. Injection cylinder 31 is generally divided into supply sections H1 and H2 where resin is supplied, compression section H3 where resin is compressed, and measurement sections H4 and H5 where the amount of compressed resin is measured. Material input section 38 into which resin is supplied is connected to the end of injection cylinder 31 in the -X-direction. Material input section 38 comprises hopper 38A for supplying the resin.

In the resin injection direction (+X-direction), supply sections H1 and H2 are divided into upstream supply section H1 on the upstream side and downstream supply section H2 on the downstream side. The boundary between upstream supply section H1 and downstream supply section H2 can be determined as appropriate. For example, the boundary can be the center of the combined upstream supply section H1 and downstream supply section H2 in the X-direction. In the resin injection direction, measurement sections H4 and H5 are divided into upstream measurement section H4 on the upstream side and downstream measurement section H5 on the downstream side. The boundary between upstream measurement section H4 and downstream measurement section H5 can be determined as appropriate. Downstream measurement section H5 can be shorter in length than upstream measurement section H4 in the X-direction.

Upstream supply section H1 is supplied with pellet-shaped resin input from material input section 38. The resin is heated by heaters 34 and gradually melted and conveyed to compression section H3. In compression section H3, the resin reaches a molten state by being compressed, heated, and kneaded, and is then transferred to measurement sections H4 and H5. Measurement sections H4 and H5 measure the amount of the resin to be injected in one injection cycle (shot).

### Heaters 34

Injection unit 3 comprises heaters 34 that heat the resin. Heaters 34 are mounted on the side surfaces 31B of injection cylinder 31 along the X-direction of injection cylinder 31. Heaters 34 are electric band heaters and are provided in each of supply sections H1 and H2, compression section H3, and measurement sections H4 and H5. Heaters 34 are provided separately in supply sections H1 and H2, compression section H3, and measurement sections H4 and H5 such that the amount of heat applied to supply sections H1 and H2, compression section H3, and measurement sections H4 and H5 can be controlled separately. At least one of heaters 34 in supply sections H1 and H2, heaters 34 in compression section H3, and heaters 34 in measurement sections H4 and H5 may be divided in the X-direction. Thermocouples (not shown) are provided in each of supply sections H1 and H2, compression section H3, and measurement sections H4 and H5, and the temperature of side surfaces 31B of injection cylinder 31 can be detected.

### Heat-Retaining Components 35

Injection unit 3 comprises heat-retaining components 35 that cover at least a part of outer circumference surfaces 34A of heaters 34 in the X-direction. Heat-retaining components 35 include a plurality of inner heat-retaining components 36 that cover at least a part of heaters 34 in the X-direction, and a plurality of outer heat-retaining components 37 that cover at least a part of inner heat-retaining components 36 in the X-direction. As described below, inner heat-retaining components 36 can be attached to only part of heaters 34 in the X-direction. In portions where inner heat-retaining components 36 are not attached, outer heat-retaining components 37 are also not attached, thereby exposing heaters 34. Although no particular limitations apply to the length in the X-direction of each of inner heat-retaining components 36 and outer heat-retaining components 37, inner heat-retaining components 36 and outer heat-retaining components 37 may be divided as appropriate in the X-direction in consideration of the ease of attachment.

### Heat Retention for Heaters 34

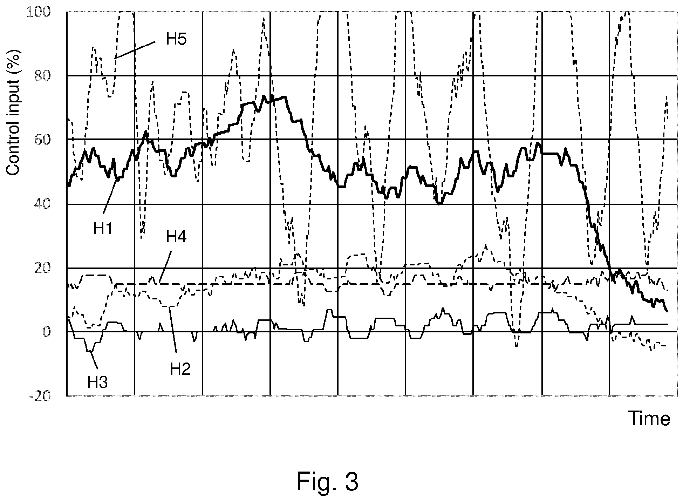

Fig. 3 shows the change over time of control input (ratio to the maximum heat generated) of heaters 34 in injection unit 3 of comparative examples. In the comparative examples, heat-retaining components having the same heat retention regardless of the position in the X-direction are attached over the entire length of heaters 34 in the X-direction. Heat retention required by heaters 34, that is, the allowable amount of heat dissipated from outer circumference surfaces 34A of heaters 34, differs depending on the region of injection cylinder 31.

Upstream supply section H1 is the area where the resin is preheated and because the resin must be heated quickly, the control input of heaters 34 is at a maximum. In addition, since upstream supply section H1 is adjacent to material input section 38 that is at a low temperature, upstream supply section H1 tends to be cooled by heat conduction between injection cylinder 31 and material input section 38. Therefore, upstream supply section H1 must have the highest heat retention. The temperature of material input section 38 is kept low to prevent the temperature of the resin from rising excessively. If the temperature of the resin rises excessively in upstream supply section H1, the resin may adhere to the inner walls of injection cylinder 31 or become clogged between injection cylinder 31 and screw 32. In order to prevent excessive increase of the temperature of material input section 38, material input section 38 may be cooled with cooling water.

Downstream supply section H2 is an area for preheating the resin as in upstream supply section H1 and is therefore required to heat the resin quickly. However, since downstream supply section H2 is separated from material input section 38 that is at a low temperature, and further, is heated by thermal conduction from upstream supply section H1, downstream supply section H2 is not required to have heat retention as high as that of upstream supply section H1.

Compression section H3 is an area where the resin is heated and kneaded. Since the temperature of the resin is still low, the resin must continue to be heated. If the resin temperature is low, unmelted resin will be mixed into the molded product or the fluidity of the resin may decrease, resulting in a decrease in the shape precision of the molded product. However, in compression section H3, shear heat is generated in the resin with the result that heat is generated not only from heater 34 but also from the resin itself. For this reason, the control input of heater 34 in compression section H3 is less than the control input of heater 34 in upstream supply section H1. Measurement sections H4 and H5 are areas in which molten resin is held after completion of heating. Therefore, in measurement sections H4 and H5, the control input of heaters 34 may be only what is required for retaining the heat of the resin, and heat retention of heat-retaining components 35 may also be only what is required for retaining the heat of the resin.

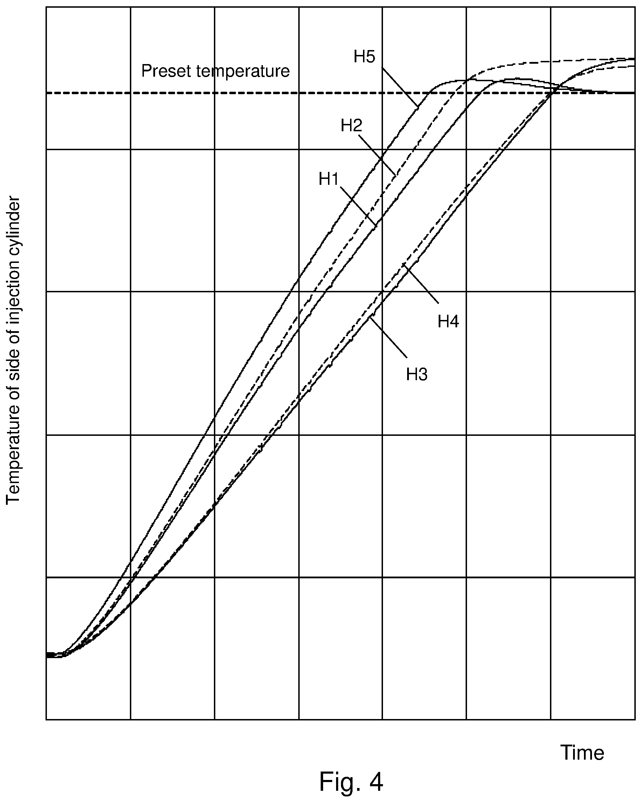

Therefore, in general, heat retention required by heaters 34 is highest in upstream supply section H1, and progressively lower in downstream supply section H2, compression section H3, and measurement sections H4 and H5, in that order. However, the inventors have found that, depending on the molding conditions and molding cycle, the amount of heat generated by the resin in compression section H3 may become too high, resulting in excessive temperature rise. If excessive temperature rise occurs, the resin will be more likely to burn (discolor) or separate. The temperature of the resin can also be controlled by the control input of heater 34. However, because the heat-retaining effect of the heat-retaining components tends to trap heat inside the components, the temperature of the resin changes slowly in response to changes in the control input of heaters 34, and this entrapment of heat complicates the appropriate control of the temperature of the resin using this method. Fig. 4 shows the temperature variation of side surfaces 31B of injection cylinder 31 in comparative examples. Because the heat-retaining effect of the heat-retaining components is high, the temperature of each part exceeds the preset temperature, but the temperature rise is particularly large in compression section H3.

Based on the points described above, in this embodiment, heat retention for heaters 34 in compression section H3 is lower than heat retention for heaters 34 in supply sections H1 and H2 and for heaters 34 in measurement sections H4 and H5. The amount of heat dissipation in compression section H3 is increased, and excessive temperature rise of the resin is therefore less likely to occur in compression section H3. When the possibility of excessive temperature rise of the resin is low and quick heating of the resin is desired, the attachment pattern of the heat-retaining components 35 should be changed as described below, and the control input of heaters 34 should be increased. In this way, the temperature of the resin in compression section H3 can be properly controlled regardless of the molding conditions and molding cycle.

Heat retention for heaters 34 in compression section H3 can be lower than heat retention for heater 34 in downstream supply section H2. Heat retention for heater 34 in downstream supply section H2 can be lower than heat retention for heater 34 in upstream supply section H1. Heat retention for heaters 34 in compression section H3 can be lower than heat retention for heaters 34 in measurement sections H4 and H5. Heat retention for heaters 34 in
measurement sections H4 and H5 can be lower than heat retention for heater 34 in upstream supply section H1. Heat retention for heater 34 in downstream supply section H2 can be lower than heat retention for heaters 34 in measurement sections H4 and H5. In other words, heat retention for heaters 34 is progressively higher in the order of compression section H3, downstream supply section H2, measurement sections H4 and H5, and upstream supply section H1.

Heat retention for heaters 34 is determined by the difficulty of heat dissipation from outer circumference surfaces 34A of heaters 34 and can be defined as T = (Q1-Q2) / Q1, where
Q1 is heat flux dissipated from outer circumference surfaces 34A of heaters 34 when no heat-retaining components 35 are provided.
Q2 is heat flux dissipated from outer circumference surfaces 34A of heaters 34 when heat-retaining components 35 are provided.

The larger the value of T, the less heat that escapes from heaters 34, and the smaller the value of T, the more heat that escapes from heaters 34. When no heat-retaining components 35 are provided (i.e., heaters 34 are exposed), Q1 = Q2, with the result that T = 0. When heat-retaining components 35 are provided, T corresponds to the thermal insulation property of heat-retaining components 35. However, T can be defined even when no heat-retaining components 35 are provided. The magnitude of heat retention for heaters 34 herein corresponds to magnitude of the value of T.

### Attachment Patterns of Heat-Retaining Components 35

Based on the points described above, specific attachment patterns of heat-retaining components 35 are next described. Table 1 shows examples of attachment patterns of heat-retaining components 35. In all patterns, multiple inner heat-retaining components 36 and multiple outer heat-retaining components 37 are attached to at least upstream supply section H1 and measurement sections H4 and H5. Pattern 1 is the configuration shown in Fig. 2 in which inner heat-retaining components 36 are attached to upstream supply section H1 and downstream supply section H2, compression section H3, and measurement sections H4 and H5, while outer heat-retaining components 37 are attached only to upstream supply section H1, downstream supply section H2, and measurement sections H4 and H5.

For the sake of convenience, in Fig. 2, the thickness of inner heat-retaining components 36 is constant regardless of location, and the thickness of outer heat-retaining components 37 is also constant regardless of location. However, as described above, each section requires different heat-retaining properties. The thickness and material (thermal conductivity) of at least one of outer heat-retaining components 37 and inner heat-retaining components 36 may be varied depending on heat retention required in each section. For example, in Pattern 1, outer heat-retaining components 37 are provided in upstream supply section H1, downstream supply section H2, and measurement sections H4 and H5. In order to reduce heat retention in downstream supply section H2, the thickness of outer heat-retaining component 37 in downstream supply section H2 may be reduced.

**Table 1**

| Sections | | Measurement sections | Compression section | Supply section | |
|---|---|---|---|---|---|
| | | | | Downstream supply section | Upstream supply section |
| | | H5/H4 | H3 | H2 | H1 |
| Pattern 1 | Outer heat-retaining components | ○ | × | ○ | ○ |
| | Inner heat-retaining components | ○ | ○ | ○ | ○ |
| Pattern 2 | Outer heat-retaining components | ○ | × | × | ○ |
| | Inner heat-retaining components | ○ | × | ○ | ○ |
| Pattern 3 | Outer heat-retaining components | ○ | × | ○ | ○ |
| | Inner heat-retaining components | ○ | × | ○ | ○ |
| Pattern 4 | Outer heat-retaining components | ○ | × | × | ○ |
| | Inner heat-retaining components | ○ | ○ | ○ | ○ |
| Pattern 5 | Outer heat-retaining components | ○ | × | × | ○ |
| | Inner heat-retaining components | ○ | × | × | ○ |

| | | | | | |
|---|---|---|---|---|---|
| ∘: Heat-retaining components are provided ×: No heat-retaining components are provided | | | | | |

In Pattern 2, inner heat-retaining components 36 are attached only to upstream supply section H1, downstream supply section H2, and measurement sections H4 and H5, while outer heat-retaining components 37 are attached only to upstream supply section H1 and measurement sections H4 and H5. In Pattern 3, inner heat-retaining components 36 and outer heat-retaining components 37 are attached only to upstream supply section H1, downstream supply section H2, and measurement sections H4 and H5. In Pattern 4, inner heat-retaining components 36 are attached to upstream supply section H1, downstream supply section H2, compression section H3, and measurement sections H4 and H5, while outer heat-retaining components 37 are attached only to upstream supply section H1 and measurement sections H4 and H5. In Pattern 5, inner heat-retaining components 36 and outer heat-retaining components 37 are attached only to upstream supply section H1 and measurement sections H4 and H5.

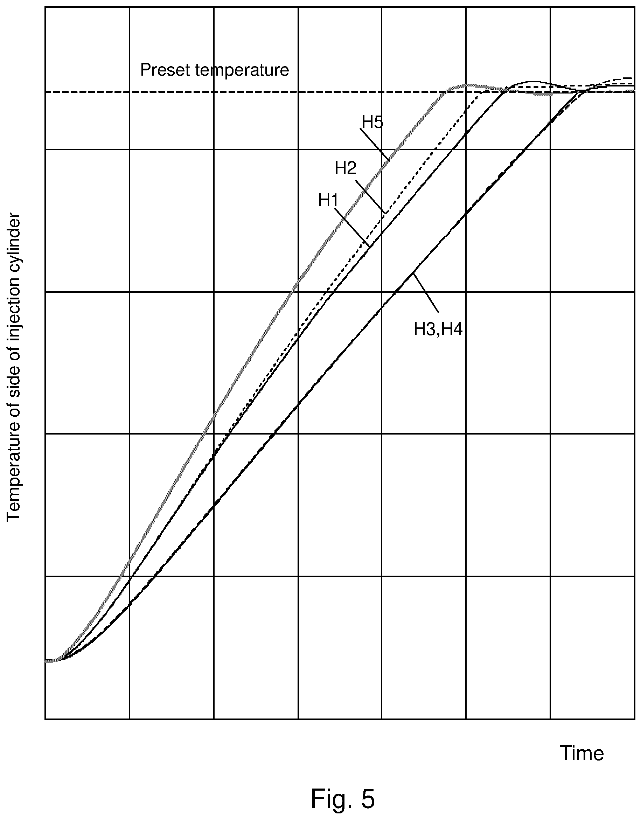

Fig. 5 shows the temperature variation in each part of injection cylinder 31 in the configuration shown in Fig. 2 (Pattern 1). Since heat retention of heat-retaining components 35 is adjusted for each section, the temperature of each section can be controlled to close to the preset temperature.

### Configuration of Heat-Retaining Components 35

Outer heat-retaining components 37 are detachable from inner heat-retaining components 36, and inner heat-retaining components 36 are detachable from heaters 34 in order that the attachment pattern of heat-retaining components 35 can be changed depending on the molding conditions and molding cycle. When adjusting injection unit 3, the plurality of outer heat-retaining components 37 can be detachably provided on some or all of the plurality of inner heat-retaining components 36 in the X-direction. The configuration of outer heat-retaining components 37 will be described below, but inner heat-retaining components 36 can be configured in the same manner as outer heat-retaining components 37.

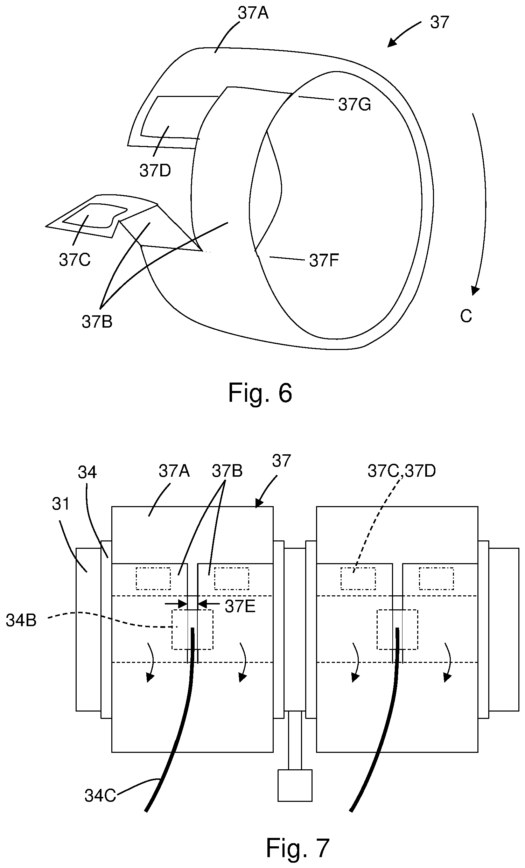

Fig. 6 shows a schematic view of outer heat-retaining components 37, and Fig. 7 shows a side view of outer heat-retaining components 37 attached to inner heat-retaining components 36. Each of the plurality of outer heat-retaining components 37 includes main part 37A that is flexible and that is a single unit in the X-direction, and two tongue parts 37B that are flexible and that are separated from each other in the X-direction. Main part 37A is wrapped around a part in circumferential direction C of inner heat-retaining components 36, and two tongue parts 37B are wrapped around the remaining part in circumferential direction C of inner insulation material 36. Both tongue parts 37B are connected to main part 37A at one end 36F in circumferential direction C and comprise joining elements 37C that can be detached or joined to main part 37A near the other end 36G in circumferential direction C. Main part 37A also includes another joining element 37D that can be joined to joining elements 37C of tongue parts 37B. Joining elements 37C can be formed, for example, by hook-and-loop fasteners.

Referring to Fig. 7, each heater 34 comprises terminal connector 34B and cable 34C extending from terminal connector 34B to the outside. In order to reduce the effects of heat, cable 34C and the terminal connector 34B are preferably placed in an area with high heat dissipation. For this reason, outer heat-retaining component 37 is arranged such that terminal connector 34B straddles two tongue parts 37B, and cable 34C is led out to the outside through gap 37E formed between the two tongue parts 37B. When inner and outer heat-retaining components 36 and 37 are stacked, inner heat-retaining component 36 and outer heat-retaining component 37 can be arranged so that the gap (not shown) of inner heat-retaining component 36 coincides with gap 37E of outer heat-retaining component 37.

The heat retaining of tongue parts 37B for heater 34 can be lower than that of main part 37A for heater 34. Heat dissipation can be easily adjusted by the thickness and material of tongue parts 37B and main part 37A. Although most of each terminal connector 34B is covered by tongue parts 37B, the thermal effect upon terminal connector 34B is mitigated because tongue parts 37B have higher heat dissipation than main part 37A.

Although the invention has been described above in connection with several preferred embodiments thereof, it will be understood by those skilled in the art that these embodiments are provided solely for illustrating the invention and do not limit the scope of the appended claims.

### LIST OF REFERENCE NUMERALS

- 1: injection molding machine
- 3: injection unit
- 31: injection cylinder
- 34: heater
- 34B: terminal connector
- 34C: cable
- 35: heat-retaining component
- 36: inner heat-retaining component
- 37: outer heat-retaining component
- 37A: main part
- 37B: tongue part
- 37C, 37D: joining elements
- H1: upstream supply section
- H2: downstream supply section
- H3: compression section
- H4, H5: measurement sections

## Claims

1. An injection unit (3) comprising:
an injection cylinder (31);
heaters (34) that are attached to side surfaces of said injection cylinder (3) along an axial direction (X) of said injection cylinder (3); and
heat-retaining components (35) that cover at least a part of outer circumference surfaces (34A) of said heaters (34) in the axial direction (X),
wherein said injection cylinder (31) comprises supply sections (H1, H2) to which an injection molding material is supplied, a compression section (H3) that compresses the injection molding material, and measurement sections (H4, H5) that measure the amount of a compressed injection molding material, and
wherein heat retention for said heaters (34) in said compression section (H3) is lower than heat retention for said heaters (34) in said supply sections (H1, H2) and heat retention for said heaters (34) in said measurement sections (H4, H5).

2. The injection unit (3) according to claim 1, wherein said supply sections (H1, H2) include an upstream supply section (H1) on an upstream side with respect to an injection direction (+X) of the injection molding material, and a downstream supply section (H2) on a downstream side with respect to the injection direction (+X) of the injection molding material, and
wherein heat retention for said heaters (34) in said downstream supply section (H2) is lower than heat retention for said heaters (34) in said upstream supply section (H1).

3. The injection unit (3) according to claim 2, wherein heat retention for said heaters (34) in said measurement sections (H4, H5) is lower than heat retention for said heaters (34) in said upstream supply section (H1).

4. The injection unit (3) according to claim 1, wherein said heat-retaining components (35) include a plurality of inner heat-retaining components (36) that cover at least a part of said heater (34) in the axial direction (X), and a plurality of outer heat-retaining components (37) that cover at least a part of said plurality of inner heat-retaining components (36) in the axial direction (X).

5. The injection unit (3) according to claim 4, wherein said supply sections (H1, H2) include an upstream supply section (H1) on an upstream side with respect to an injection direction (+X) of the injection molding material, and a downstream supply section (H2) on a downstream side with respect to the injection direction (+X) of the injection molding material, and
wherein said plurality of inner heat-retaining components (36) and said plurality of outer heat-retaining components (37) are attached to said upstream supply section (H1) and said measurement sections (H4, H5).

6. The injection unit (3) according to claim 5, wherein said plurality of inner heat-retaining components (36) are attached to said upstream supply section (H1), said downstream supply section (H2), said compression section (H3), and said measurement sections (H4, H5), and wherein said plurality of outer heat-retaining components (37) are attached only to said upstream supply section (H1), said downstream supply section (H2), and said measurement sections (H4, H5).

7. The injection unit (3) according to claim 5, wherein said plurality of inner heat-retaining components (36) are attached only to said upstream supply section (H1), said downstream supply section (H2), and said measurement sections (H4, H5), and wherein said plurality of outer heat-retaining components (37) are attached only to said upstream supply section (H1) and said measurement sections (H4, H5).

8. The injection unit (3) according to claim 5, wherein said plurality of inner heat-retaining components (36) and said plurality of outer heat-retaining components (37) are attached only to said upstream supply section (H1) and said measurement sections (H4, H5).

9. The injection unit (3) of according to any one of claims 5 to 8, wherein said plurality of outer heat-retaining components (37) are detachable from said plurality of inner heat-retaining components (36).

10. The injection unit (3) according to claim 9, wherein each of said plurality of outer heat-retaining components (37) comprises a main part (37A) that is flexible and that is a single unit in the axial direction (X), and two tongue parts (37B) that are flexible and that are separated from each other in the axial direction (X),
wherein said main part (37A) is wrapped around a circumferential part of a respective one of said plurality of inner heat-retaining components (36), and said two tongue parts (37B) are wrapped around remaining circumferential parts of said respective one of said plurality of inner heat-retaining components (36), and
wherein said two tongue parts (37B) are connected to said main part (37A) at one end in a circumferential direction and comprise joining elements (37C, 37D) that are detachable and joinable to said main part (37A) near the other end in the circumferential direction.

11. The injection unit (3) according to claim 10, wherein said joining elements (37C, 37D) are hook-and-loop fasteners.

12. The injection unit (3) according to claim 10, wherein each of said heaters (34) comprises a terminal connector (34B) and a cable (34C) extending from said terminal connector (34B) to an outside, and
wherein said cable (34C) is led out to the outside between said two tongue parts (37B).

13. The injection unit (3) according to claim 10, wherein heat retention of said tongue parts (37B) with respect to a respective one of said heaters (34) is lower than heat retention of said main part (37A) with respect to a respective one of said heaters (34).

14. An injection molding machine (1) comprising an injection unit (3), and a mold-clamping unit (2) that supports a mold and that opens and closes said mold,
wherein said injection unit (3) comprises:
an injection cylinder (31);
heaters (34) that are attached to side surfaces of said injection cylinder (3) along an axial direction (X) of said injection cylinder (3); and
heat-retaining components (35) that cover at least a part of outer circumference surfaces (34A) of said heaters (34) in the axial direction (X),
wherein said injection cylinder (31) comprises supply sections (H1, H2) to which an injection molding material is supplied, a compression section (H3) that compresses the injection molding material, and measurement sections (H4, H5) that measure the amount of a compressed injection molding material, and
wherein heat retention for said heaters (34) in said compression section (H3) is lower than heat retention for said heaters (34) in said supply sections (H1, H2) and heat retention for said heaters (34) in said measurement sections (H4, H5).

15. The injection molding machine (1) according to claim 14, wherein said supply sections (H1, H2) include an upstream supply section (H1) on an upstream side with respect to an injection direction (+X) of the injection molding material, and a downstream supply section (H2) on a downstream side with respect to the injection direction (+X) of the injection molding material, and
wherein heat retention for said heaters (34) in said downstream supply section (H2) is lower than heat retention for said heaters (34) in said upstream supply section (H1).

16. The injection molding machine (1) according to claim 15, wherein heat retention for said heaters (34) in said measurement sections (H4, H5) is lower than heat retention for said heaters (34) in said upstream supply section (H1).

17. The injection molding machine according to claim 14, wherein said heat-retaining components (35) include a plurality of inner heat-retaining components (36) that cover at least a part of said heaters (34) in the axial direction (X), and a plurality of outer heat-retaining components (37) that each cover at least a part of respective one of said plurality of inner heat-retaining components (36) in the axial direction (X).

18. The injection molding machine (1) according to claim 17, wherein said supply sections (H1, H2) include an upstream supply section (H1) on an upstream side with respect to an injection direction (+X) of the injection molding material, and a downstream supply section (H2) on a downstream side with respect to the injection direction (+X) of the injection molding material, and
wherein said plurality of inner heat-retaining components (36) and said plurality of outer heat-retaining components (37) are attached to said upstream supply section (H1) and said measurement sections (H4, H5).

19. The injection molding machine (1) according to any one of claims 14 to 18, wherein said plurality of outer heat-retaining components (37) are detachable from said plurality of inner heat-retaining components (36).

20. An adjusting method for an injection unit (3), wherein said injection unit (3) comprises:
an injection cylinder (31);
heaters (34) that are attached to side surfaces of said injection cylinder (3) along an axial direction (X) of said injection cylinder (3); and
a plurality of inner heat-retaining components (36) that each cover at least a part a respective one of said heater (31) in the axial direction (X), the method comprising:
detachably attaching a plurality of outer heat-retaining components (37) to at least a part of said plurality of inner heat-retaining components (36) in the axial direction (X).
